Europäisches Patentamt

European Patent Office

Office européen des brevets

(11) Numéro de publication: **0 235 849**
**A2**

# (12) DEMANDE DE BREVET EUROPEEN

(21) Numéro de dépôt: 87200250.6

(22) Date de dépôt: **17.02.87**

(51) Int. Cl.⁴: **B29C 47/82** , B29C 45/74

(30) Priorité: **03.03.86 IT 6716986**

(43) Date de publication de la demande:
**09.09.87 Bulletin 87/37**

(84) Etats contractants désignés:
**AT DE ES FR GB**

(71) Demandeur: **LYS FUSION S.P.A.**
**Via Beauviermoz 22**
**I-11020 Hône (Aoste)(IT)**

(72) Inventeur: **Parisi, Nicola, Dr. Ing.**
**Via Madame Cristina 45**
**I-10125 Torino(IT)**

(74) Mandataire: **Patrito, Pier Franco, Dr. Ing.**
**Cabinet PATRITO BREVETTI Via Don Minzoni 14**
**I-10121 Torino(IT)**

(54) **Système de chauffage à induction de la chambre de plastification d'une presse pour le moulage à injection ou pour l'extrusion de matières plastiques, ou d'une machine similaire.**

(57) Un système de chauffage électrique de la chambre de plastification (10) d'une presse pour le moulage à injection ou pour l'extrusion de matières plastiques, ou d'une machine similaire, qui comprend: un enroulement électrique (11,12,13) disposé à l'extérieur de la paroi de la chambre de plastification (10) pour engendrer un champ électromagnétique qui se développe à l'intérieur de la chambre de plastification; un générateur d'alimentation (A) pour cet enroulement électrique (11,12,13), disposé pour lui fournir un courant électrique alternatif de fréquence comprise dans le domaine de 1 à 50 kHz; et un circuit de contrôle (C) pour ce générateur d'alimentation (A), comportant au moins une sonde thermométrique (14,15,16), disposé pour contrôler d'une façon thermostatique le chauffage produit par l'enroulement (11,12,13), en dépendance du signal produit par la sonde thermométrique (14,15,16). Le système permet d'obtenir un chauffage rapide, régulier et uniforme de la matière plastique, en évitant les surchauffes, et de réduire considérablement la consommation d'énergie, le chauffage des parties qu'on peut toucher et les périodes de commencement de travail, ainsi que, dans des machines de nouvelle conception, l'encombrement général.

FIG. 2

# SYSTEME DE CHAUFFAGE A INDUCTION DE LA CHAMBRE DE PLASTIFICATION D'UNE PRESSE POUR LE MOULAGE A INJECTION OU POUR L'EXTRUSION DE MATIERES PLASTIQUES, OU D'UNE MACHINE SIMILAIRE

La présente invention a pour objet un système de chauffage électrique de la chambre de plastification d'une presse pour le moulage à injection ou pour l'extrusion de matières plastiques, ou d'une machine similaire.

Dans les presses pour le moulage à injection ou pour l'extrusion de matières plastiques, la chambre de plastification a la fonction de chauffer la matière plastique, introduite à froid et, en général, sous la forme de grains, jusqu'à une température à laquelle elle montre une plasticité suffisante pour permettere son injection dans un moule ou similaire, ou bien son extrusion. La chambre de plastification peut comporter un cylindre alimenté par une vis et dans lequel un piston actionné d'une façon opportune peut avancer pour effectuer l'injection, ou bien le dispositif à vis lui-même peut être actionné pour effectuer en son temps l'avancement sous pression de la matière plastique contenue dans la chambre de plastification. Pour porter la matière plastique à la température prévue, la chambre de plastification doit être chauffée, et cela est fait d'habitude moyennant un système de résistances électriques disposées dans une jupe qui environne la paroi de la chambre de plastification. Ces résistances sont alimentées par un circuit d'alimentation prévu à cet effet, fonctionnant sous le contrôle de sondes thermométriques insérées en des endroits appropriés. Un contrôle thermométrique soigneux est nécessaire parce que le champ de températures dans lequel chaque matière plastique peut être convenablement injectée ou extrudée, sans pourtant subir des détériorations dues à surchauffe, est limité et, pour certaines catégories de matières plastiques, il est même très limité. Cependant, malgré le contrôle thermométrique prévu, les systèmes connus de chauffage par résistances électriques donnent lieu souvent à une détérioration plus ou moins sérieuse des matières plastiques employées. Cela est dû au fait que la chaleur est produite, dans les résistances, à l'extérieur de la chambre de plastification, et elle doit arriver à chaque point de la chambre en traversant avant tout la paroi métallique épaisse de la chambre de plastification, puis la masse elle-même de la matière plastique à chauffer, laquelle a des mauvaises propriétés de conduction de la chaleur, de sorte qu'un gradient thermique élevé se produit lelong d'une direction radiale par rapport à la chambre de plastification, et la différence de température entre les couches périphériques et les couches internes de la matière plastique contenue est considérable. Comme les couches les plus froides doivent être portées à une température telle à autoriser l'injection ou l'extrusion, on ne peut pas éviter que les couches les plus chaudes soient surchauffées. Afin de limiter ces différences de température et la détérioration de la matière plastique qui en découle, le chauffage doit être relativement lent, et cela oblige à donner à la chambre de plastification une longueur considérablement plus grande qu'elle ne serait autrement nécessaire, avec les inconvénients qui en résultent pour le prix de revient et l'encombrement de la presse. Des long temps de mise en marche doivent être prévus pour le premier chauffage au commencement d'un cycle de travail. De plus, les résistances de chauffage de la chambre de plastification ne peuvent pas être isolées thermiquement vers l'extérieur d'une façon efficace, afin de ne pas courir le danger de surchauffe et de brûlure de ces résistances, et de ce fait découle le double inconvénient qu'on gaspille une quantité considérable d'énergie, et que les surfaces extérieures de la chambre de plastification prennent des températures dangéreuses pour les ouvriers, de sorte qu'on doit prendre des mesures de protection.

Les problèmes indiqués afférent aux presses pour le moulage à injection ou pour l'extrusion des matières plastiques se retrouvent aussi en relation à d'autres machines similaires.

En vue de ces circonstances, le but de la présente invention est de réaliser un système plus rationnel de chauffage électrique de la chambre de plastification d'une presse pour le moulage à injection ou pour l'extrusion de matières plastiques, ou d'une machine similaire, qui puisse remédier aux inconvénients indiqués et, plus en particulier, qui soit capable d'assurer un chauffage plus uniforme de la masse de matière plastique contenue dans la chambre de plastification, de réduire les pertes d'énergie vers l'extérieur, et de limiter à des valeurs non dangéreuses les températures atteintes par les surfaces extérieures de la chambre de plastification.

Ce but est atteint, suivant l'invention, par un système de chauffage électrique de la chambre de plastification d'une presse pour le moulage à injection ou pour l'extrusion de matières plastiques, ou d'une machine similaire, qui comprend: un enroulement électrique disposé à l'extérieur de la paroi de la chambre de plastification pour engendrer un champ électromagnétique qui se développe à l'intérieur de la chambre de plastification; un générateur d'alimentation pour ledit enroulement électrique, disposé pour lui fournir un courant électrique alternatif de fréquence comprise dans le domaine de 1 à 50 kHz; et un circuit de contrôle pour ledit générateur, comportant au moins une sonde thermométrique, disposé pour contrôler d'une façon thermostatique le chauffage produit par ledit enroulement, en dépendance du signal produit par ladite sonde thermométrique.

Grâce à ce système, la plupart de la chaleur est produite par induction et par perte diélectrique dans la masse elle-même de la matière plastique contenue dans la chambre de plastification. Par conséquent, dans ladite masse se produisent des gradients thermiques radiaux très limités, et les différences de température d'un point à l'autre de la masse lelong des directions radiales sont petites en correspondance. On a donc la possibilité de porter et de maintenir toute la masse de matière plastique à une température uniforme, comprise entre la température de plastification prescrite et la température à laquelle peuvent commen cer à se verifier des détériorations. On évite ainsi systématiquement toute détérioration, même en travaillant avec ces matières plastiques pour lesquelles la différence entre lesdites deux températures est très limitée. De plus, comme la chaleur est produite dans l'intérieur de la chambre de plastification et non pas à l'extérieur, la surface externe de la machine se trouve au niveau minimum, au lieu qu'au niveau maximum, du champ de températures du système. De ce fait se découle, d'un côté, que le gaspillage d'énergie vers l'extérieur est minimal, et d'autre côté que les surfaces qu'on peut toucher prennent des températures relativament réduites, non dangéreuses pour les ouvriers, telles à ne pas exiger aucun dispositif de protection. En particulier, le rendement énergétique du système en résulte très amélioré. En effet, dans la pratique, la réduction dans la consommation d'énergie se montre telle à faire soupçonner que l'induction, appliquée dans le domaine de fréquences indiqué, en plus de la génération de chaleur puisse donner lieu aussi à quelques autres phénomènes capables de favoriser le passage des matériaux synthétiques à l'état plastique.

Le choix du domaine de fréquences indiqué, en outre, rend minimale la production de chaleur dans le matériau métallique constituant la paroi de la chambre de plastification. En effet, on doit remarquer qu'un système constructivement similaire, prédisposé suivant les critères adoptés, par exemple, pour engendrer par induction la chaleur en des matériaux métalliques dans les systèmes de chauffage pour la trempe à induction, serait alimenté à des fréquences comprises dans un domaine entièrement différent, en général de 50 à 200 Hz. On a constaté avec surprise que, par le choix convenable du domaine de fréquences indiqué, la production de la chaleur se vérifie pour la plupart dans la masse de matière plastique et seulement dans une proportion négligeable dans la paroi métallique de la chambre de plastification, en surmontant ainsi celui qui, sur la base de l'expérience commune, pouvait paraître comme un empêchement qu'on n'aurait pas pu surmonter dans l'emploi d'un système de chauffage à induction pour la chambre de plastification.

L'invention pourra être comprise plus clairement par la suivante description d'un mode de réalisation donné à titre d'exemple non limitatif, se référant au cas particulier d'une presse pour le moulage à injection de matières plastiques - schématiquement représentée dans le dessin annexé, dans lequel:

Fig. 1 montre en petite échelle et de façon sommaire une presse pour le moulage à injection de matières plastiques, à laquelle peut être appliquée l'invention; et

Fig. 2 montre à une échelle plus grande la disposition du système de chauffage suivant l'invention, par rapport à la chambre de plastification de la presse suivant la figure 1.

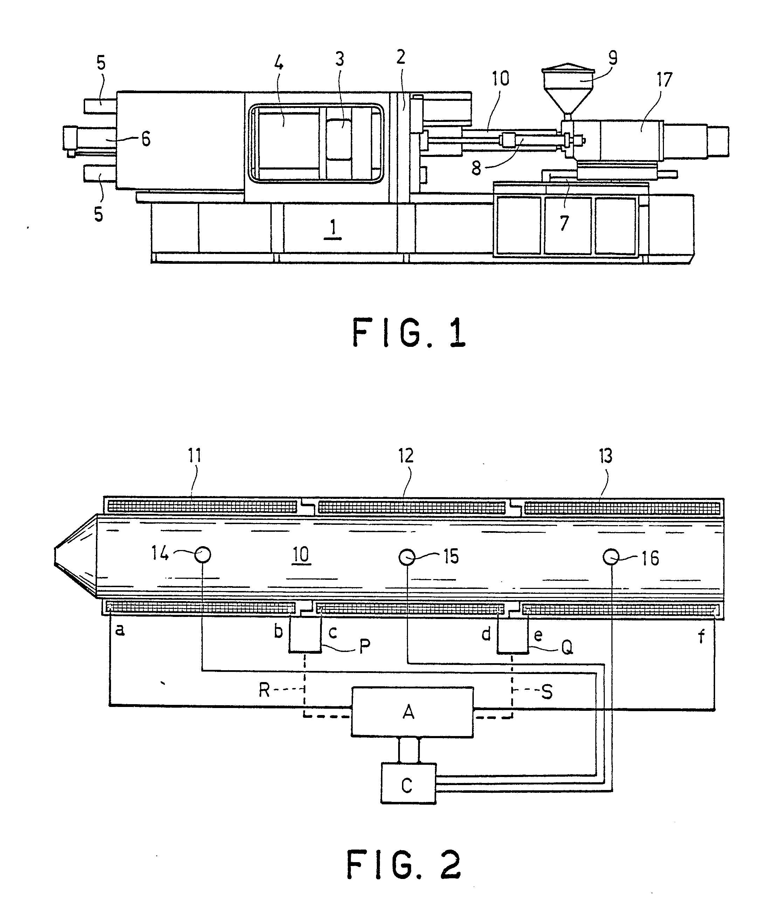

Faisant référence d'abord à la figure 1, la presse y représentée comprend un embasement 1 sur lequel est montée une tête fixe 2 destinée à supporter une moitié d'un moule 3. L'autre moitié du moule 3 est supportée par une tête mobile 4 montée sur des glissières 5 et déplaçable sous l'action d'un cylindre 6. Du côté opposé à la tête fixe 2, sur une glissière 7 est monté un groupe d'injection qui peut être déplacé par rapport à la tête fixe 2 sous l'action d'un cylindre 8. Ce groupe d'injection comprend une trémie 9 pour l'introduction de la matière plastique à l'état de grains, une chambre de plastification 10, traversée à l'intérieur pour toute sa longueur par une vis transporteuse, et un groupe moto-réducteur 17 pour actionner ladite vis. Les parties décrites sont bien connues en soi comme les parties d'un type spécifique de presse de moulage à injection, lequel a été pris ici comme exemple pour l'application de l'invention. Dans les constructions connues, la paroi cylindrique de la chambre de plastification 10 est entourée par un système de résistances électriques qui la chauffent, en donnant lieu aux inconvénients déjà indiqués.

Suivant l'invention (figure 2), au contraire, la chambre de plastification 10 est entourée par un enroulement électrique. Dans la forme de réalisation représentée, cet enroulement électrique est constitué par trois bobines 11, 12 et 13, insérées l'une après l'autre sur la chambre de plastification 10 et enroulées coaxialement à la chambre. Comme il est indiqué par des lignes continues, les bornes intermédiaires b,c et d,e des bobines 11-13 peuvent être connectées entr'elles par des petits ponts P, Q, de sorte à connecter en série ces bobines. Les bornes d'extrémité a,f sont connectées à un circuit d'alimentation A capable de fournir un courant électrique alternatif ayant une fréquence comprise dans le domaine de 1 à 50 kHz. De son côté, l'alimentateur A est contrôlé par un circuit de contrôle C, lequel reçoit les signaux produits par des sondes thermométriques 14, 15, 16 opportunèment disposées par rapport à la chambre de plastification 10. Le circuit de contrôle C est prédisposé de façon à interrompre périodiquement, ou bien à limiter graduellement, l'alimentation fournie aux bobines 11-13 par l'alimentateur A, et cela en sorte que la température engendrée dans la matière plastique présente dans la chambre de plastification 10, révélée par les sondes thermométriques 14-16, soit comprise dans un domaine préétabli en fonction de la nature de la matière plastique employée, de façon telle à assurer que celle-ci atteint une plasticité appropriée pour permettre une injection convenable, mais aussi telle à exclure la détérioration du matériau à cause de surchauffe.

Les bobines 11-13 alimentées par le circuit A engendrent un champ électromagnétique alternatif à moyenne fréquence qui, à l'intérieur des bobines, se développe lelong de toute la chambre de plastification 10 en intéressant toute sa section d'une façon substantiellement uniforme. L'effet de ce champ d'induction sur la matière plastique, en considération des pertes diélectriques qui se vérifient dans la matière plastique, est avant tout celui d'engendrer dans la masse elle-même de la matière plastique une certaine quantité de chaleur, qui en augmente la température. A' cause de l'uniformité d'action de cette induction sur toute la masse de matière plastique contenue dans la chambre de plastification, aucun gradient thermique appréciable ne se forme en direction radiale, tandis que la température de la matière plastique augmente graduellement à partir de l'extrémité d'entrée, voisine de la trémie 9, vers l'extrémité opposée de sortie de la chambre de plastification, d'où la matière plastique est injectée, en son temps, dans le moule. Dans ces conditions, la détection des températures réellement atteintes, effectuée par les sondes thermométriques 14-16, permet d'atteindre à l'extrémité de sortie, avec une très bonne approximation, la température voulue en évitant toute surchauffe locale et donc toute détérioration de la matière plastique. Grâce à sa distribution uniforme, le chauffage peut être effectué plus rapidement, ainsi réduisant de façon draconienne les périodes d'attente lors du commencement des cycles de travail.

Lors qu'on le croit à propos, des connexions R,S (indiquées par des lignes interrompues) peuvent être établies entre les petits ponts P,Q et des prises de l'alimentateur A. Cela permet d'alimenter les différentes bobines 11-13 d'une façon indépendante au lieu qu'en série. Dans ce cas on a la possibilité de contrôler aussi la loi de variation de la température de la matière plastique lelong de la chambre de plastification 10. Spécialement dans ce cas il peut être à propos de disposer plusieurs sondes thermométriques 14-16, tandis qu'avec des bobines alimentées en série on peut considérer suffisante même la seule sonde thermométrique 14 disposée près de l'extrémité de sortie.

Il est essentiel pour l'application de l'invention que la fréquence du courant électrique qui alimente les bobines 11-13 soit comprise dans le domaine indiqué, à savoir de 1 à 50 KHz. Si la fréquence était inférieur à 1 kHz, une quantité de chaleur excessive serait engendrée dans la paroi métallique de la chambre de plastification 10, et on rencontrerait encore l'inconvénient d'un chauffage excessif des couches périphériques de la matière plastique, comme dans les systèmes de chauffage connus. Si la fréquence était portée au-dessus de 50 kHz on rencontrerait des difficultés de réalisation à cause desquelles le système ne pourrait plus être économiquement accepté.

Le choix optimal de la fréquence dans le domaine indiqué dépend de plusieurs facteurs en en particulier, d'un côté, de la nature de la matière plastique employée, et d'autre côté des moyens adoptés pour engen drer le courant alternatif à moyenne fréquence dans le circuit d'alimentation A. Si l'appareillage est destiné à travailler avec un genre de matières plastiques seulement, l'alimentateur A peut avoir des caractéristiques préétablies et fixées. Si, au contraire, l'appareillage est destiné à pouvoir travailler avec des genres différents de matières plastiques, l'alimentateur A est de préférence d'un type réglable, capable d'engendrer des différénts domaines de fréquences, et il est réglé chaque fois en fonction du type de matière plastique à traiter. On peut considérer comme particulièrement avantageux l'emploi d'un alimentateur A prédisposé pour engendrer un courant formé par plusieurs composants formant un spectre préétabli de fréquences, qui peut être constant ou bien variable dans le temps. Dans le cas où les diverses bobines 11-13 sont alimentées indépendamment, on peut aussi prévoir d'alimenter chaque bobine par une fréquence différente des autres.

Aussi la façon par laquelle le circuit de contrôle C influence le circuit d'alimentation A peut être différente, comme il est bien connu par la technique de l'électronique. En particulier, le circuit de contrôle C peut travailler de façon analogique, en modifiant graduellement la puissance électrique envoyée à l'enroulement d'induction en fonction du signal reçu des sondes thermométriques. Alternativement, le circuit de contrôle peut travailler en interrompant périodiquement la génération du courant d'alimentation de la part de l'alimentateur A. Dans ce dernier cas, l'alimentation des bobines 11-13 peut consister en des trains de courant alternatif ayant un spectre de fréquence constant ou variable dans le temps, et le réglage de la puissance est effectué par le réglage des périodes d'inactivité séparant les trains successifs.

Un système de chauffage selon l'invention peut être appliqué à des presses existantes, en remplacement du système de chauffage à résistances préexistant, ainsi arrivant aux avantages d'éviter toute possible détérioration des matériaux et de réduire la consommation d'énergie, la température des parties exposées et les temps d'attente lors du commencement des cycles de travail. D'autre côté, le système selon l'inven tion peut être appliqué à des presses de conception nouvelle, et dans ce cas, en plus d'assurer lesdits avantages, il autorise aussi de prévoir un chauffage plus rapide de la matière plastique à partir de l'endroit d'alimentation vers l'endroit de sortie, et donc de prévoir une longueur plus réduite de la chambre de plastification et de toute la presse. Une conséquence de la plus grande compacité qu'on peut obtenir grâce à l'application de l'invention peut être aussi le retour au choix de systèmes d'injection à cylindre et piston, auxquels lex conditions de fonctionnement qu'on réalisait précédemment faisaient préférer les systèmes à vis fonctionnant comme piston. De plus, comme on l'a dit, le système de chauffage selon l'invention, qui a été décrit en détail par rapport à une presse pour moulage à injection, peut être également appliqué aux presses pour extrusion, ainsi qu'à toute autre machine similaire ou qui peut présenter des problèmes similaires.

La disposition des bobines 11-13 sous forme de sections successives d'enroulements toriques coaxiaux par rapport à la chambre de plastification 10 présente des avantages de construction et d'installation, mais il est bien entendu qu'on pourrait aussi concevoir d'autres dispositions des enroulements, cela particulièrement pour des machines de nouvelle conception.

**Revendications**

1 . Système de chauffage électrique de la chambre de plastification (10) d'une presse pour le moulage à injection ou pour l'extrusion de matières plastiques, ou d'une machine similaire, caractérisé en ce qu'il comprend: un enroulement électrique (11,12,13) disposé à l'extérieur de la paroi de la chambre de plastification (10) pour engendrer un champ électromagnétique qui se développe à l'intérieur de la chambre de plastification (10); un générateur d'alimentation (A) pour ledit enroulement électrique (11,12,13), disposé pour lui fournir un courant électrique alternatif de fréquence comprise dans le domaine de 1 à 50 kHz; et un circuit de contrôle (C) pour ledit générateur (A), comportant au moins une sonde thermométrique - (14,15,16), disposé pour contrôler d'une façon thermostatique le chauffage produit par ledit enroulement (11,12,13), en dépendance du signal produit par ladite sonde thermométrique (14,15,16).

2 . Système de chauffage selon la revendication 1, caractérisé en ce que ledit enroulement électrique (11,12,13) est coaxial par rapport à la chambre de plastification (10).

3 . Système de chauffage selon la revendication 1, caractérisé en ce que ledit enroulement électrique est constitué par plusieurs bobines successives (11,12,13), alimentées en série ou indépendamment.

4 . Système de chauffage selon la revendication 1, caractérisé en ce que ledit générateur d'alimentation (A) est prédisposé pour pouvoir engendrer des différents domaines de fréquences, pour le traitement optimal de matières plastiques différentes.

5 . Système de chauffage selon la revendication 1, caractérisé en ce que ledit générateur d'alimentation (A) est prédisposé pour engendrer des courants d'alimentation ayant des composants de fréquences différen tes, formant un spectre constant ou variable dans le temps.

6 . Système de chauffage selon la revendication 1, caractérisé en ce que ledit circuit de contrôle (C) est prédisposé pour agir d'une façon analogique sur ledit générateur d'alimentation (A), en modifiant la puissance de sortie en fonction des signaux reçus des sondes thermométriques - (14,15,16).

7 . Système de chauffage selon la revendication 1, caractérisé en ce que ledit circuit de contrôle (C) est prédisposé pour agir sur ledit générateur d'alimentation (A) en interrompant périodiquement son érogation pour des périodes de temps dépendant des signaux reçus des sondes thermométriques (14,15,16).

8 . Presse pour le moulage à injection ou pour l'extrusion de matières plastiques, ou machine similaire, caractérisée en ce qu'elle est pourvue d'une chambre de plastification avec système de chauffage selon une des revendications 1 à 7.

FIG. 1

FIG. 2